# EUROPÄISCHE PATENTANMELDUNG

(11) **EP 3 267 302 A1**
(43) Veröffentlichungstag der Anmeldung: **10.01.2018**
(21) Anmeldenummer: 17174648.0
(22) Anmeldetag: 07.06.2017
(51) Int. Cl.: G06F 3/0488, G06F 3/0484, A47J 37/00

(54) **BEDIENVORRICHTUNG MIT EINEM BERÜHRBILDSCHIRM FÜR EIN ELEKTRISCHES GERÄT**

(30) Priorität: 06.07.2016 DE 102016112338
(71) Anmelder: Miele & Cie. KG, 33332 Gütersloh (DE)
(72) Erfinder: Pohlüke, Margit, 33334 Gütersloh (DE)

(57) **Zusammenfassung**

Die Erfindung betrifft eine Bedienvorrichtung (5) für ein elektrisches Gerät (1), die eine als Berührschirm (15) ausgebildete Blende (6) umfasst, mit einem Display (16) und einem transparenten Sensorfeld (17), das in Wirkverbindung mit einem Mikrocontroller (19) steht zur Bestimmung einer Berührposition oder einer Berührbewegung auf der Blende (6) bzw. auf dem Berührschirm (15), wobei der Mikrocontroller (19) dazu eingerichtet ist, Betriebsarten, Programme und/oder Parameter als Schaltfläche (T, F, Z) zur Auswahl durch Berührung der dargestellten Schaltfläche (T, F, Z) anzuzeigen und die Anzeige zur Auswahl der Betriebsart oder von Parametern bereitzustellen zum Konfigurieren des Programmes im elektrischen Gerät (1).

Die Bedienvorrichtung ist derart ausgebildet, dass die Schaltfläche (T, F, Z) eine Mehrzahl von verschiedenen Werten für einen Parameter repräsentiert und einen Referenzort (20) aufweist, wobei eine Auswahl oder Werteeingabe durch eine Berührung oder eine Wischgeste in einem Abstand zum Referenzort vorgesehen ist, derart, dass der Abstand und die geometrische Lage der Berührung oder Wischgeste (21, 23) die Veränderung des der Schaltfläche (T, F, Z) zugeordneten Wertes bestimmt.

Die Erfindung betrifft ferner ein Haushaltsgerät mit einer solchen Bedienvorrichtung und ein Gargerät mit einer solchen Bedienvorrichtung.

## Beschreibung

Die Erfindung betrifft eine Bedienvorrichtung für ein elektrisches Gerät, die eine als Berührschirm ausgebildete Blende umfasst, mit einem Display und einem transparenten Sensorfeld, das in Wirkverbindung mit einem Mikrocontroller steht zur Bestimmung einer Berührposition oder einer Berührbewegung auf der Blende bzw. auf dem Berührschirm, wobei der Mikrocontroller dazu eingerichtet ist, Betriebsarten, Programme und/oder Parameter als Schaltfläche zur Auswahl durch Berührung der dargestellten Schaltfläche anzuzeigen und die Anzeige zur Auswahl der Betriebsart oder von Parametern bereitzustellen zum Konfigurieren des Programmes im elektrischen Gerät.

In Haushaltgeräten ist es bekannt, Bedienvorrichtungen zum Konfigurieren oder zur Auswahl eines Programms zu verwenden, die eine Displaysteuerung mit Touch-Display umfassen. Diese hat den Vorteil, dass Piktogramme oder Textanzeigen immer genau dort erfolgen, wo sich dann jeweils die Berührposition zur Aktivierung befindet. Aus der DE 10 2009 011 678 A1 ist eine entsprechende Bedienvorrichtung für eine Waschmaschine bekannt. Aus der DE 10 2009 006 224 A1 ist eine entsprechende Bedienvorrichtung für ein Gargerät bekannt. Hierbei muss der Benutzer aus einer Vielzahl von dargestellten Symbolen einzelne Symbole durch eine Verschiebebewegung einer Berührposition in einen vorgegeben Bereich verschieben, um auf diese Art ein Garprogramm zu kreieren oder konfigurieren. Nachteilig ist hierbei, dass aufgrund der Vielzahl von individuellen Möglichkeiten die Programmzusammenstellung für den normalen Anwender im Haushalt unübersichtlich werden kann. Durch diese Darbietung der Möglichkeiten können sich schnell Fehlprogrammierungen oder Fehlbedienungen einstellen.

Aus der DE 10 2007 062 016 ist eine Bedienvorrichtung bekannt, bei der ein Benutzer mittels Tastenfeldern eine Beeinflussung der Betriebsparameter vornehmen kann. Dabei ist das Einstellelement balkenförmig ausgebildet, wobei die beiden Enden jeweils einen Extremwert für ein gewünschtes Resultat repräsentieren. Eine Positionierung des Einstellelementes in einer gewünschten Zwischenlage bewirkt in der Steuereinrichtung eine entsprechende Einstellung bzw. Auswahl von einzelnen Parametern, die zu dem gewünschte Resultat, beispielsweise "schnell" oder "intensiv" des Programmes führen. Hierbei sind jedoch die Möglichkeiten, ein Programm individuell anzupassen, sehr begrenzt.

Die bekannten Bedienvorrichtungen sind zwar einfach und intuitiv zu bedienen, jedoch sind genaue Eingaben oder Einstellungen nur mit ruhiger Hand und sehr genauer Platzierung der Berührhand zu bewerkstelligen. Auch Tastatureingaben, wie sie ein sogenannter 10-er Block bereitstellt, erfordern eine Eingabe von mehreren Ziffern, was häufig als aufwändig empfunden wird.

Der Erfindung liegt somit die Aufgabe zu Grunde, eine einfache und übersichtliche Handhabung für Parametereingaben und Auswahleingaben bereitzustellen.

Erfindungsgemäß wird unter anderem diese Aufgabe durch eine Bedienvorrichtung mit den Merkmalen des unabhängigen Anspruchs 1, ein Haushaltsgerät gemäß Anspruch 10 und ein Gargerät gemäß Anspruch 11 gelöst. Vorteilhafte Ausgestaltungen und Weiterbildungen der Erfindung ergeben sich aus den jeweils abhängigen Ansprüchen.

Die mit der Erfindung erreichbaren Vorteile bestehen darin, dass auf einfache Wiese eine intuitive Form der Werteeingabe bereitgestellt wird. Hierzu ist die Bedienvorrichtung derart ausgebildet und eingerichtet, dass die Schaltfläche eine Mehrzahl von verschiedenen Werten für einen Parameter repräsentiert und einen Referenzort aufweist, wobei eine Auswahl oder Werteeingabe durch eine Berührung oder eine Wischgeste in einem Abstand zum Referenzort vorgesehen ist, derart, dass der Abstand und die geometrische Lage der Berührung oder Wischgeste die Veränderung des der Schaltfläche zugeordneten Wertes bestimmt. Aufgrund des so gebildeten großflächigen Interaktionsfeldes wird ein großer Spielraum für die Bedienmöglichkeiten bereitgestellt. Insbesondere können große Wertebereiche schnell durchfahren werden und bei Bedarf kann auch die Feineinstellung von Werten und Parametern erfolgen, ohne dass komplizierte und unübersichtliche Menü-Umschaltungen in der Displaysteuerung notwendig sind. Die Werte oder Parameter werden dabei numerisch, textuell, akustisch und/oder grafisch dargestellt.

In einer vorteilhaften Ausführung ist der Schaltfläche, die für einen einstellbaren Wert steht, ein Interaktionsfeld zugeordnet, das durch eine X-Koordinate begrenzter Länge und eine in einem etwa rechten Winkel dazu angeordnete Y-Koordinate begrenzter Länge definiert ist. Der angezeigte Wert befindet sich dabei innerhalb oder außerhalb des Interaktionsfeldes.

In einer weiteren, insgesamt zweckmäßigen Ausführung der Bedienvorrichtung kann der Referenzort durch ein erstes Berühren im Zuge einer Wischgeste festgelegt werden. Damit wird der Ort des Interaktionsfeldes jeweils mit der Bedienhandlung selbst individuell festgelegt, wodurch dem Bediener kaum Grenzen hinsichtlich der Bedienhandlungen gesetzt werden.

In einer weiteren, insgesamt vorteilhaften Ausführung ist die Bedienvorrichtung derart eingerichtet und konfiguriert, dass die Richtung der Geste in dem am Referenzort angrenzenden Interaktionsfeld das Vorzeichen und /oder die Größe- der Werteveränderung bestimmt. Somit kann beispielsweise bei einer Wischbewegung nach oben der Wert erhöht und bei einer Wischbewegung nach unten vermindert werden. Insgesamt ist es hierbei nicht notwendig, dass der Bediener eine vorgegebene Berührposition genau treffen muss, allein die Wischgeste innerhalb des Interaktionsfeldes führt zu der Veränderung oder Einstellung des Wertes.

Wie bereits oben ausgeführt, ist das Interaktionsfeld durch ein Koordinatenkreuz definiert, wobei in einer zweckmäßigen Weiterbildung eine Berührung oder Berührgeste im ersten oder zweiten Quadranten des Koordinatenfeldes aufsteigende Werte für die Werteveränderung festlegt, wobei eine Berührung oder Berührgeste im dritten oder vierten Quadranten des Koordinatenfeldes absteigende Werte für die Werteveränderung festlegt. Damit ist auf einfache Weise für den Benutzer festgelegt, wie die von ihm gewünschten Zielwerte eingestellt werden.

In einer insgesamt vorteilhaften Ausführung ist die Bedienvorrichtung derart ausgebildet und eingerichtet, dass die Skalierung, also die Stufen für den zu verändernden Wert in der Art eines virtuellen Hebels eingestellt ist, wobei für eine Bewegungsrichtung entlang der X-Koordinate eine feine Stufung, entlang der Y-Koordinate eine grobe Stufung und für mindestens eine Bewegungsrichtung entlang einer gedachten Linie in einem Winkel zwischen der X-Koordinate und der Y-Koordinate eine Skalierung oder Stufung festgelegt ist, die zwischen der groben und der feinen Stufung liegt. Die Skalierung bzw. Stufung kann von dem Winkel abhängig sein, d.h. es kann auch mehr als eine Bewegungsrichtung bzw. mehrere Winkel einer möglichen Bewegung zwischen grober und feiner Stufung geben.

Bevorzugt soll der zu verändernde Wert in festen Stufen veränderbar sein, etwa um ganzzahlige Gradwerte bei einer einzustellenden Temperatur. Daher gibt es bevorzugt eine feste Anzahl von Winkeln bzw. Winkelkorridoren, denen jeweils eine solche z.B. ganzzahlige Stufung zugeordnet ist. Alternativ kann auch eine stufenlos variable Skalierung in Abhängigkeit vom Winkel vorgesehen werden, mit den Extremwerten der genannten groben und feinen Skalierung. Damit können auf einfache Weise große Wertebereiche übersprungen oder ausgewählt werden und ferner können auch sehr feine oder feingranulare Einstellungen vorgenommen werden. Dies ist vergleichbar mit einer Drehwalhlhandhabe, der ein Untersetzungsgetriebe zur Auswertevorrichtung nachgeschaltet ist. Optional kann nach Abschluss der Werteingabe ggf. eine Rundung erfolgen, z.B. auf ganzzahlige Gradwerte, wenn der eingegebene Wert zwischen zwei Stufen bzw. Werten der Skalierung liegt.

Die Bedienvorrichtung ist bevorzugt zum Einsatz für ein Gargerät, wie Backofen, Dampfgarer oder Mikrowellenofen geeignet und ausgebildet für die Einstellung und Auswahl der Garraumtemperatur, wobei die grobe Skalierung Schritte im Bereich 5 bis 10 °C und die feine Skalierung Einstellschritte im Bereich von 1 bis 2 °C. umfasst.

Die Bedienvorrichtung ist ferner zum Einsatz für ein Gargerät wie Backofen, Dampfgarer, Mikrowellenofen oder Kochfeld geeignet und ausgebildet für die Einstellung und Auswahl der Leistungsstufe für ein Gebläse bzw. Umluftgebläse, wobei bei einer Skalierung von beispielsweise 0 bis 20 (maximale Leistung) die grobe Skalierung Stufen im Bereich von 2 bis 5 und die feine Skalierung Einstellschritte im Bereich von 0,2 bis 1 Stufen umfasst.

Die Bedienvorrichtung ist ferner zum Einsatz für ein Gargerät wie Backofen, Dampfgarer, Mikrowellenofen oder Kochfeld geeignet und ausgebildet für die Einstellung und Auswahl der Garzeit, wobei die grobe Skalierung Schritte im Bereich 5 bis 10 Minuten und die feine Skalierung Einstellschritte im Bereich von 1 bis 2 Minuten umfasst.

Die Erfindung betrifft auch ein Haushaltsgerät mit einem oder mehreren Aktoren zur Behandlung eines Behandlungsgutes, einer Steuereinrichtung zum Aktivieren und Deaktivieren der Aktoren zur Durchführung eines Behandlungsprogrammes oder Behandlungsablaufs und einer Bedienvorrichtung wie vorstehend genannt, die mit der Steuereinrichtung in Wirkverbindung steht zur Auswahl und Einstellung des Behandlungsprogrammes.

Die Erfindung betrifft ferner ein Gargerät wie Backofen, Dampfgarer, Mikrowellenofen oder Kochfeld zur Behandlung eines Behandlungsgutes, einer Steuereinrichtung zum Aktivieren und Deaktivieren der Aktoren zur Durchführung eines Garprogramms und einer Bedienvorrichtung wie vorstehend genannt, die mit der Steuereinrichtung in Wirkverbindung steht zur Auswahl und Einstellung des Garprogramms.

Ein Ausführungsbeispiel der Erfindung ist in den Zeichnungen rein schematisch dargestellt und wird nachfolgend näher beschrieben. Es zeigen
- Fig. 1:: ein elektrisches Gerät mit einer Bedienvorrichtung;
- Fig. 2:: die Bedienvorrichtung in schematischer Ansicht; und
- Fig. 3 bis 5:: Darstellungen von Bedienhandlungen.

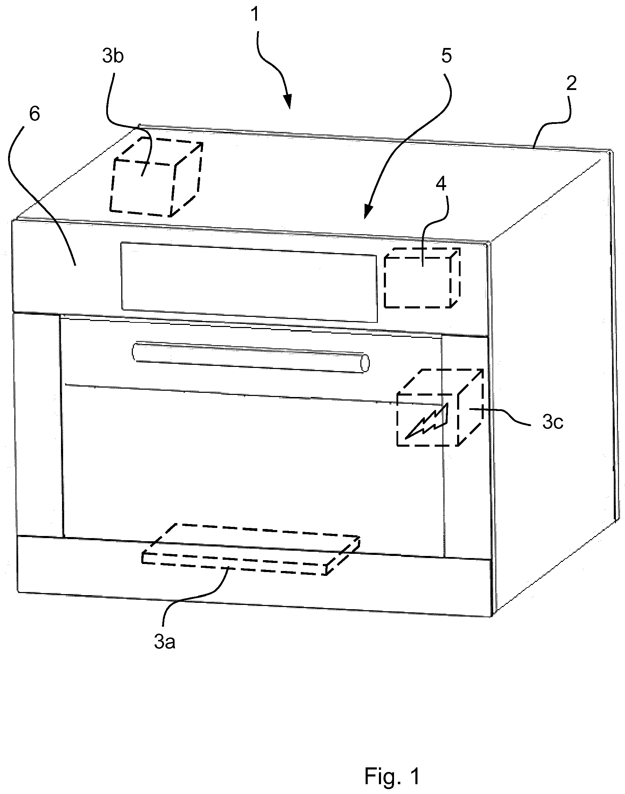

Das elektrische Gerät 1 gemäß Fig. 1 umfasst in diesem Beispiel ein Gehäuse 2 und elektrisch betriebene Komponenten 3 und eine Steuereinrichtung 4 zum Betrieb des Gerätes. 1 Hierbei handelt es sich um einen Backofen, der als Einbaugerät ausgeführt ist, sodass die Steuereinrichtung 4 anhand von Benutzereingaben zur Durchführung eines Garprogramms die elektrischen oder elektronischen Komponenten bzw. Lasten 3, wie Heizkörper 3a, Gebläse 3b oder Mikrowellensender 3c entsprechend aktiviert oder deaktiviert. Das elektrische Gerät 1 umfasst ferner eine Bedienvorrichtung 5, die eine für den Benutzer zugängliche Blende 6 mit daran angeordneten Schaltflächen bzw. Betätigungsflächen 7 umfasst. Der Benutzer kann durch Betätigung der Schaltflächen 7 vorbestimmte Programme wie sogenannte automatische Garprogramme oder Parametereinstellungen vornehmen, die dann von der Steuereinrichtung 4 entsprechend verarbeitet werden. In dem gezeigten Beispiel ist die Bedienvorrichtung 5 mit einer senkrechten Blende 6 versehen, die im vorderen oberen Bereich des Gerätes 1 bzw. Gerätegehäuses 2 angebracht ist. Die Blende 6 kann alternativ oder kombiniert als schräge oder bombierte Blende 6 im oder am Gerätegehäuse 2 angeordnet werden.

Die Steuereinrichtung 4 wirkt hierbei mit der Bedieneinrichtung 5 zusammen bzw. kann Bestandteil der Bedieneinrichtung 5 sein, da zur Auswertung der Bedienhandlung die Steuereinrichtung 4 verwendet wird. Alternativ kann die Bedieneinrichtung 5 eine separate Steuerung mit eigenem Mikrocontroller enthalten, der mit der Gerätesteuerung 4 zusammenwirkt bzw. mit dieser in Kommunikationsverbindung steht.

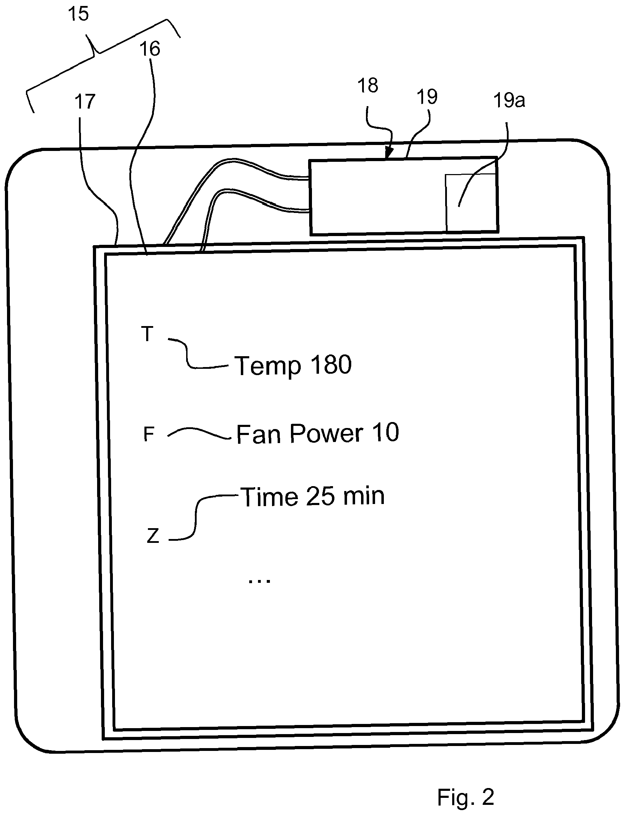

In Fig. 2 ist die Bedienvorrichtung 9 als Detail skizziert. Die Bedienvorrichtung 9 umfasst eine Blende 14 bzw. zumindest einen Blendenbereich, der als Berührschirm 15 ausgebildet ist. Der Berührschirm 15 umfasst hierbei ein Display 16 und ein transparentes Sensorfeld 17, das zwischen Blende 14 und Display 16 angebracht ist und mit einem Mikrocontroller 18 zur Erfassung der Berührposition in Wirkverbindung steht. Das Display 16 wird ebenfalls von einem oder von dem Mikrocontroller 19 bzw. einer Steuereinrichtung 18 mit einem Mikrocontroller 19 angesteuert, um abhängig von der jeweils aktivierten Bedienungsmöglichkeit die entsprechenden Schaltflächen T, F, Z auf dem Display 16 darzustellen. Die Steuereinrichtung 18 oder der Mikrocontroller 19 kann derart ausgelegt sein, dass sie auch die Lasten bzw. Aktoren, die das elektrische Gerät bzw. Haushaltgerät 1 umfasst, steuert, um einen Behandlungsprozess bzw. Garprozess ("Garprogramm") durchzuführen. Der Mikrocontroller 19 steht dabei mit einem Speicher 19a in Verbindung, in dem bereits vordefinierte Programme gespeichert sind. In den Speicher 19a können zumindest einige vordefinierte Programme verändert und überschrieben werden oder zusätzliche, individuell vom Benutzer definierte Programme abgespeichert werden.

Gemäß Fig. 2 ist beispielhaft der Berührschirm 15 mit der Darstellung für Bedienhandlungen für ein bereits ausgewähltes Garprogramm dargestellt, das vom Bediener nachträglich hinsichtlich bestimmter Wirkungen oder Ergebnisse verändert werden kann. In dem gezeigten Beispiel sind Garraumtemperatur T TEMP=180 °C, Gebläse F Fan Power Stufe 10 und Garzeit Z Time auf 25 Minuten eingestellt. Um beispielsweise die Temperatur zu verändern, muss dieser Parameter T zunächst durch Berührung dieser Schaltfläche T auf dem Berührschirm 15 ausgewählt werden.

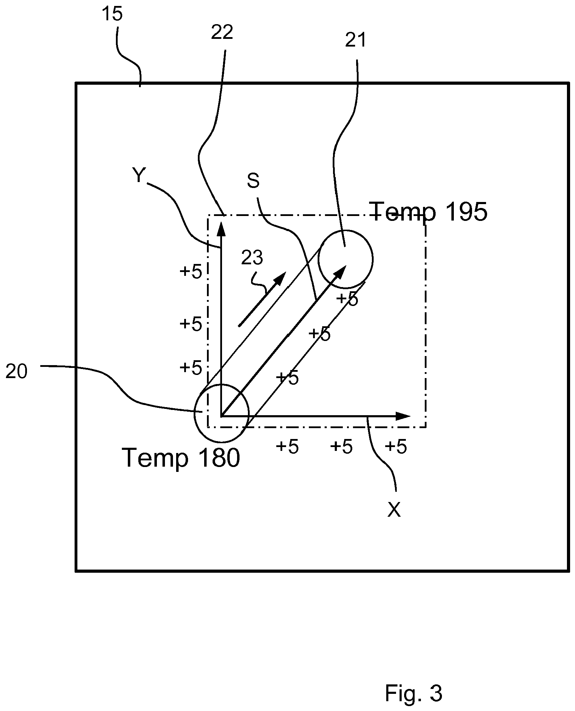

Fig. 3 zeigt beispielhaft eine Bedienhandlung, bei der die Temperatur für ein Garprozess oder Garprogramm von 180 °C auf 195°C erhöht wird. Hierbei ist bereits vorab eine Einstellung der Temperatur ausgewählt worden. Zu Beginn der Bedienhandlung wird ein Finger des Bedieners auf den Referenzort 20 gelegt. Benachbart zum Referenzort wird nun das Interaktionsfeld 22 aktiviert, das durch die rechtwinklig zueinander stehenden Koordinaten X und Y definiert ist. Anschließend wird der Finger in Richtung 23 in diesem Interaktionsfeld geführt, also schräg zur X-Koordinate und Y-Koordinate im ersten Quadranten eines gedachten Koordinatenkreuzes. Die Bedienvorrichtung 5 ist hierbei so konfiguriert, dass sich etwa für jeden zurückgelegten 1 cm eine Werteänderung von +5°C einstellt. Nach 3 cm Wischgeste ist an der Zielfläche 21 der gewünschte Endwert von 195 °C erreicht. Eine Wischgeste entgegen der Pfeilrichtung 23 würde eine Verringerung des Temperaturwertes in der gleichen Art und Weise bewirken.

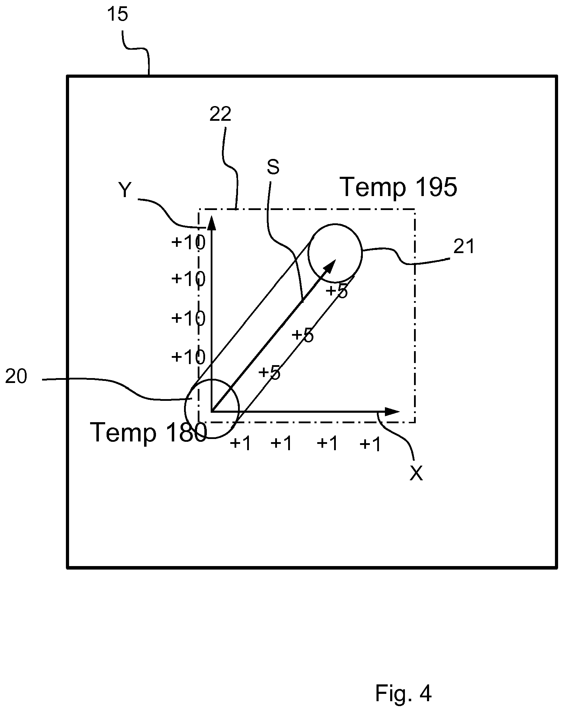

Fig. 4 zeigt eine bevorzugte Weiterbildung der Bedienvorrichtung, bei der unterschiedliche Stufungen für die Werteänderung bereitgestellt werden. Zu Beginn der Bedienhandlung wird ein Finger des Bedieners auf den Referenzort 20 gelegt. Benachbart zum Referenzort 20 wird nun das Interaktionsfeld 22 aktiviert, das durch die rechtwinklig zueinander stehenden Koordinaten X und Y definiert ist. Anschließend wird der Finger in Richtung 23 in diesem Interaktionsfeld geführt, also schräg zur X-Koordinate und Y-Koordinate im ersten Quadranten eines gedachten Koordinatenkreuzes. Die Bedienvorrichtung 5 ist hierbei so konfiguriert, dass sich etwa für jeden zurückgelegten 1 cm eine Werteänderung von +5°C einstellt. Nach 3 cm Wischgeste ist an der Zielfläche 21 der gewünschte Endwert T von 195 °C erreicht. Wenn der Finger entlang der Y-Achse geführt wird, ergibt sich eine Werteänderung von +10 °C pro cm. Bei einer Führung oder Wischgeste entlang der X-Ache ergibt sich eine Werteänderung von +1 °C pro cm, wodurch sehr einfach eine genaue und feine Einstellung des Temperaturwertes erreicht wird.

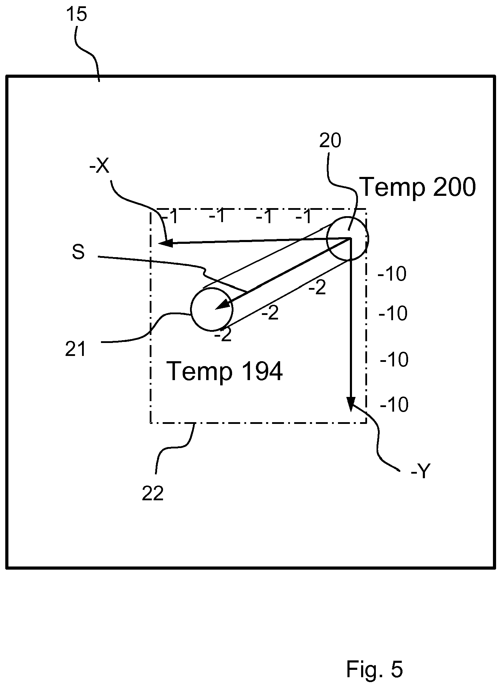

Fig. 5 zeigt beispielhaft eine Bedienhandlung bei der vorstehend genannten Ausführung der Bedienvorrichtung 5, bei der die Temperatur für ein Garprozess oder Garprogramm von 200 °C auf 194°C vermindert wird. Nach dem Definieren des Referenzortes 20 durch Auflegen des Fingers auf diese Stelle wird eine Bewegung schräg in Richtung -X und -Y vollzogen, wobei die Bewegungskoordinate S näher an der-X-Koordinate liegt. Hierbei wird eine Werteänderung von -2 °C pro cm eingestellt. Nach 3 cm Wischgeste entlang der Bewegungskoordinate S ist an der Zielfläche 21 der gewünschte Endwert T von 194 °C erreicht. Wenn die Bewegungskoordinate S etwa 45 ° zwischen der X-Koordinate und der Y Koordinate im dritten Quadranten liegt, so ist eine Werteänderung von -5 °C pro cm eingestellt. Wenn die Bewegungskoordinate S sich weiter an die Y-Achse nähert, vergrößert sich entsprechend der Betrag der Werteänderung pro cm.

## Patentansprüche

1. Bedienvorrichtung (5) für ein elektrisches Gerät (1), die eine als Berührschirm (15) ausgebildete Blende (6) umfasst, mit einem Display (16) und einem transparenten Sensorfeld (17), das in Wirkverbindung mit einem Mikrocontroller (19) steht zur Bestimmung einer Berührposition oder einer Berührbewegung auf der Blende (6) bzw. auf dem Berührschirm (15), wobei der Mikrocontroller (19) dazu eingerichtet ist, Betriebsarten, Programme und/oder Parameter als Schaltfläche (T, F, Z) zur Auswahl durch Berührung der dargestellten Schaltfläche (T, F, Z) anzuzeigen und die Anzeige zur Auswahl der Betriebsart oder von Parametern bereitzustellen zum Konfigurieren des Programmes im elektrischen Gerät (1),
**dadurch gekennzeichnet,**
**dass** die Schaltfläche (T, F, Z) eine Mehrzahl von verschiedenen Werten für einen Parameter repräsentiert und einen Referenzort (20) aufweist, wobei eine Auswahl oder Werteeingabe durch eine Berührung oder eine Wischgeste in einem Abstand zum Referenzort vorgesehen ist, derart, dass der Abstand und die geometrische Lage der Berührung oder Wischgeste (21, 23) die Veränderung des der Schaltfläche (T, F, Z) zugeordneten Wertes bestimmt.

2. Bedienvorrichtung nach Anspruch 1,
**dadurch gekennzeichnet,**
**dass** der Schaltfläche (T, F, Z) ein Interaktionsfeld (22) zugeordnet ist, das durch eine X-Koordinate (X, -X) begrenzter Länge und eine in einem etwa rechten Winkel dazu angeordnete Y-Koordinate (Y, -Y) begrenzter Länge definiert ist.

3. Bedienvorrichtung nach Anspruch 1 oder 2,
**dadurch gekennzeichnet,**
**dass** der Referenzort (20) durch ein erstes Berühren im Zuge einer Wischgeste festgelegt werden kann.

4. Bedienvorrichtung nach einem der Ansprüche 1 bis 3,
**dadurch gekennzeichnet,**
**dass** die Richtung (21, 23) der Geste im dem am Referenzort (20) angrenzenden Interaktionsfeldes (22) das Vorzeichen und/oder die Größe der Werteveränderung bestimmt.

5. Bedienvorrichtung nach Anspruch 4,
**dadurch gekennzeichnet,**
**dass** eine Berührung oder Berührgeste (21) im ersten oder zweiten Quadranten des Koordinatenfeldes (22) aufsteigende Werte für die Werteveränderung festlegt.

6. Bedienvorrichtung nach Anspruch 4,
**dadurch gekennzeichnet,**
**dass** eine Berührung oder Berührgeste (21) im dritten oder vierten Quadranten (22) des Koordinatenfeldes absteigende Werte für die Werteveränderung festlegt.

7. Bedienvorrichtung nach einem der Ansprüche 1 bis 6,
**dadurch gekennzeichnet,**
**dass** die Skalierung, also die Stufen für den zu verändernden Wert, in der Art eines virtuellen Hebels eingestellt ist, wobei für eine Bewegungsrichtung entlang der X-Koordinate eine feine Stufung, entlang der Y-Koordinate eine grobe Stufung und für eine oder mehrere Bewegungsrichtungen entlang einer jeweiligen gedachten Linie in einem jeweiligen Winkel zwischen der X-Koordinate und der Y-Koordinate eine jeweilige Skalierung oder Stufung festgelegt ist, die zwischen der groben und der feinen Stufung liegt

8. Bedienvorrichtung nach Anspruch 7, wobei die Skalierung oder Stufung von dem Winkel abhängt.

9. Bedienvorrichtung nach einem der Ansprüche 4 bis 8, zum Einsatz für ein Gargerät (1), wie Backofen, Dampfgarer, Mikrowellenofen oder Kochfeld, und ausgebildet für die Einstellung und Auswahl der Garraumtemperatur,
**dadurch gekennzeichnet, dass** die grobe Skalierung Schritte im Bereich 5 bis 10 °C und die feine Skalierung Einstellschritte im Bereich von 1 bis 2 °C umfasst.

10. Bedienvorrichtung nach einem der Ansprüche 4 bis 8, zum Einsatz für ein Gargerät (1), wie Backofen, Dampfgarer, Mikrowellenofen oder Kochfeld, und ausgebildet für die Einstellung und Auswahl der Leistungsstufe für ein Gebläse bzw. Umluftgebläse, **dadurch gekennzeichnet, dass** die grobe Skalierung Stufen im Bereich von 2 bis 5 und die feine Skalierung Einstellschritte im Bereich von 0,2 bis 1 Stufen umfasst.

11. Bedienvorrichtung nach einem der Ansprüche 4 bis 8, zum Einsatz für ein Gargerät (1), wie Backofen, Dampfgarer, Mikrowellenofen oder Kochfeld, und ausgebildet für die Einstellung und Auswahl der Garzeit,
**dadurch gekennzeichnet, dass** die grobe Skalierung Schritte im Bereich 5 bis 10 Minuten und die feine Skalierung Einstellschritte im Bereich von 1 bis 2 Minuten umfasst.

12. Haushaltsgerät mit einem oder mehreren Aktoren zur Behandlung eines Behandlungsgutes, einer Steuereinrichtung zum Aktivieren und Deaktivieren der Aktoren (3, 3a, 3b, 3c) zur Durchführung eines Behandlungsprogrammes oder Behandlungsablaufs und einer Bedienvorrichtung (5) gemäß einem der Ansprüche 1 bis 11, die mit der Steuereinrichtung (4) in Wirkverbindung steht zur Auswahl und Einstellung des Behandlungsprogrammes.

13. Gargerät, wie Backofen, Dampfgarer, Mikrowellenofen oder Kochfeld, zur Behandlung eines Behandlungsgutes, einer Steuereinrichtung (4) zum Aktivieren und Deaktivieren der Aktoren (3, 3a, 3b, 3c) zur Durchführung eines Garprogramms und einer Bedienvorrichtung (5) gemäß einem der Ansprüche 1 bis 11, die mit der Steuereinrichtung (4) in Wirkverbindung steht zur Auswahl und Einstellung des Garprogramms.
